# EUROPÄISCHE PATENTANMELDUNG

(11) **EP 1 489 678 A2**
(43) Veröffentlichungstag der Anmeldung: **22.12.2004**
(21) Anmeldenummer: 03025211.8
(22) Anmeldetag: 05.11.2003
(51) Int. Cl.: H01M 10/04, H01M 2/02, H01M 2/04, H01M 2/08

(54) **Galvanisches Element in Form einer Knopfzelle und Verfahren zur Herstellung eines galvanischen Elements**

(30) Priorität: 21.03.2003 DE 10313830
(71) Anmelder: VARTA Microbattery GmbH, 30419 Hannover (DE)
(72) Erfinder: Holl, Konrad, Dr., 73434 Aalen-Dewangen (DE); Joas, Alfons, 73497 Tannhausen (DE); Wagner, Horst, 73797 Rosenberg (DE); Akca, Kemal, 73479 Ellwangen (DE); Perner, Arno, Dr., 73479 Ellwangen (DE); Ilic, Dejan, Dr., 73479 Ellwangen (DE)
(74) Vertreter: Patentanwälte Ruff, Wilhelm, Beier, Dauster & Partner

(57) **Zusammenfassung**

Bei einem galvanischen Element in Form einer Knopfzelle mit mindestens einer Lithium interkalierenden Elektrode (2, 4) besitzen der Zellendeckel (5) oder der Zellenbecher (1) eine Öffnung (8), welche während der Formation dicht verschlossen ist. Nach abgeschlossener Formation ist sie kurzzeitig zur Entgasung der Zelle geöffnet und wird danach gasdicht verschlossen. Zellendeckel (5) und Zellenbecher (1) bestehen insbesondere aus Metall. Die Öffnung (8) kann durch eine Metall- oder Metall-Kunststoffverbundfolie (7) verschlossen werden, die mit dem Zellendeckel (5) oder Zellenbecher (1) verklebt oder verschweißt wird.

## Beschreibung

### Anwendungsgebiet und Stand der Technik

Gegenstand der Erfindung ist ein galvanisches Element in Form einer Knopfzelle mit mindestens einer Lithium interkalierenden Elektrode sowie ein Verfahren zur Herstellung eines galvanischen Elements.

Galvanische Elemente in Form einer Knopfzelle sind mit verschiedenen Elektroden bekannt, beispielsweise mit positiven Nickelhydroxidelektroden und negativen Metallhydridelektroden oder mit negativen Zinkelektroden und positiven Silberoxidelektroden oder als Lithium-Ionen-Zellen. Alle diese Knopfzellen besitzen einen Zellenbecher und ein Zellengehäuse, die unter Zwischenlage einer Dichtung gasdicht miteinander verbunden sind. Bei wiederaufladbaren Knopfzellen mit mindestens einer Lithium-interkalierenden Elektrode entstehen während der Formation Gase. Daher werden diese Zellen unverschlossen unter Argon als Schutzgas formiert und erst danach endgültig gasdicht verschlossen.

### Aufgabe und Lösung

Der Erfindung liegt die Aufgabe zugrunde, ein galvanisches Element der eingangs genannten Gattung sowie ein Verfahren zur Herstellung eines galvanischen Elements anzugeben, bei welchen auf die aufwendige Formation unter Schutzgasatmosphäre verzichtet werden kann.

Diese Aufgabe wird bei einem eingangs genannten galvanischen Element durch die Merkmale des Anspruchs 1 gelöst, ebenso durch ein Verfahren mit den Merkmalen des Anspruchs 6. In den Unteransprüchen sind vorteilhafte Ausgestaltungen der Erfindung angegeben und werden im folgenden näher erläutert. Der Wortlaut der Ansprüche wird durch ausdrückliche Bezugnahme zum Inhalt der Beschreibung gemacht.

Durch die Verwendung oder den Einsatz einer verschließbaren Öffnung im Deckel oder Becher des Knopfzellengehäuses können Knopfzellen und insbesondere Lithium-Ionen-Knopfzellen im verschlossenen Zustand formiert werden. Dabei kann die Schutzgasatmosphäre entfallen. Nach Beendigung der Formation werden die Knopfzellen durch Öffnen der Abdichtung der Öffnung im Deckel oder Becher entgast und dann durch Wiederverschließen der Öffnung endgültig gasdicht verschlossen.

Zellendeckel und/oder Zellenbecher können aus Kunststoff bestehen. Vorzugsweise bestehen sie aus Metall. Die Öffnung wird insbesondere durch eine Metall- oder Metall-Kunststoffverbundfolie verschlossen. Diese Folie kann mit dem Gehäuse verklebt oder verschweißt sein. Als endgültiger Verschluss kann die Öffnung mit einem Kunststoff vergossen werden. Bei Verwendung eines Verschlusses in Form einer Folie kann diese auch als Berstmembran dienen, was die Betriebssicherheit der Zelle auch unter ungünstigsten Verhältnissen verbessert.

Das Abdichtungselement kann mit dem Deckel oder Becher durch Kalt- oder Heißverklebung oder durch direkte Verschweißung, beispielsweise mittels Ultraschall, verbunden werden. Alternativ kann die Öffnung mit einem Kunststoffmaterial vergossen werden.

Diese und weitere Merkmale gehen außer aus den Ansprüchen auch aus der Beschreibung und der Zeichnung hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

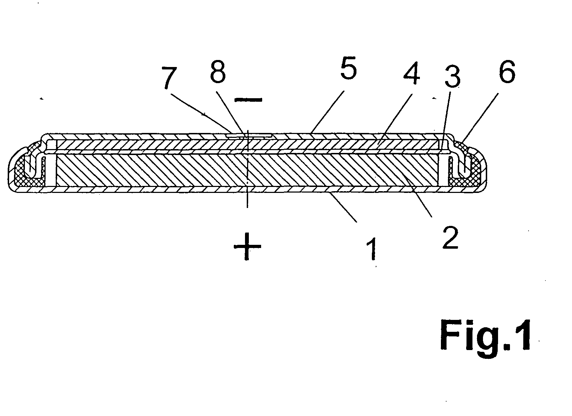

Im Folgenden ist der Gegenstand der Erfindung anhand der schematischen Figur 1 näher erläutert.

Eine beispielhafte Lithium-Ionen-Knopfzelle als ein Ausführungsbeispiel der Erfindung besteht aus einem Becher 1 und einer Kathode 2, welche bevorzugt LiCoO₂, LiNiO₂ oder LiMn₂O₄ ist. Des weiteren ist eine Anode 4 vorgesehen, bevorzugt aus Graphit oder Kohlenstoff. Außerdem sind ein Deckel 5 und eine Dichtung 6, z.B. aus Polypropylen, vorgesehen. Die Anode 4 und die Kathode 2 werden durch einen Separator 3 getrennt, der bevorzugt Polypropylen oder Polyethylen ist.

Im Becher 1 oder Deckel 5 befindet sich eine reversibel verschließbare Öffnung 8, durch die die entstandenen Formationsgase abgelassen werden können. Die Öffnung 8 ist während der Formation durch eine Kunststofffolie aus Polypropylen oder Polyethylen, oder durch eine Metall- oder Metall-Kunststoffverbundfolie 7, zugeklebt bzw. zugesiegelt. Die Metall-Kunststoffverbundfolie 7 kann beispielsweise eine Aluminiumverbundfolie sein. Die Folie sollte nur eine möglichst geringe Gasdiffusion erlauben.

Nach der Formation kann die Zelle durch Entfernen, Durchstechen oder Durchstoßen der Folie entgast werden. Anschließend wird die Öffnung gasdicht verschlossen. Dazu dient beispielsweise eine aufgeschweißte oder aufgeklebte dünne Metallfolie, welche aus Edelstahl, Nickel oder Aluminium bestehen kann.

Je nach Bemessung der Dicke der Abdichtfolie kann diese im Betrieb der Zelle auch als Berstmembran bei Überdruck fungieren.

## Patentansprüche

1. Galvanisches Element in Form einer Knopfzelle mit mindestens einer Lithium interkalierenden Elektrode (2, 4) und einem Gehäuse (1, 5), **dadurch gekennzeichnet, dass** das Gehäuse (1, 5) eine Öffnung (8) besitzt, welche während der Formation des galvanischen Elements dicht verschlossen ist, nach abgeschlossener Formation kurzzeitig zur Entgasung des galvanischen Elements geöffnet ist und die danach gasdicht verschlossen ist.

2. Galvanisches Element nach Anspruch1, **dadurch gekennzeichnet, dass** das Gehäuse einen Deckel (5) und/oder einen Becher (1) aufweist, insbesondere aus Metall.

3. Galvanisches Element nach Anspruch 1 oder 2, **dadurch gekennzeichnet, dass** die Öffnung (8) durch eine Folie (7) verschlossen ist, vorzugsweise eine Metall- oder Metall-Kunststoffverbundfolie.

4. Galvanisches Element nach Anspruch 2 und 3, **dadurch gekennzeichnet, dass** die Folie (7) mit dem Deckel (5) oder dem Becher (1) verklebt oder verschweißt ist.

5. Galvanisches Element nach Anspruch 1 oder 2, **dadurch gekennzeichnet, dass** die Öffnung (8) mit einem Kunststoff vergossen ist.

6. Verfahren zur Herstellung eines galvanischen Elements in Form einer Knopfzelle mit mindestens einer Lithium interkalierenden Elektrode (2, 4) und einem Gehäuse (1, 5), insbesondere eines galvanischen Elements nach einem der vorhergehenden Ansprüche, **dadurch gekennzeichnet, dass** das Gehäuse (1, 5) eine Öffnung (8) besitzt und diese Öffnung (8) während der Formation des galvanischen Elements dicht verschlossen wird, nach abgeschlossener Formation kurzzeitig zur Entgasung des galvanischen Elements geöffnet wird und danach gasdicht verschlossen wird.

7. Verfahren nach Anspruch 6, **dadurch gekennzeichnet, dass** die Öffnung (8) durch eine Folie (7) verschlossen wird und die Folie (7) mit dem Gehäuse, insbesondere einem Deckel (5) oder Becher (1), verklebt oder verschweißt wird.

8. Verfahren nach Anspruch 6, **dadurch gekennzeichnet, dass** die Öffnung (8) mit einem Kunststoff vergossen wird.
